Europäisches Patentamt

European Patent Office

Office européen des brevets

(11) Numéro de publication: **0 069 666**
**B1**

(12) **FASCICULE DE BREVET EUROPÉEN**

(45) Date de publication du fascicule du brevet:
15.10.86

(21) Numéro de dépôt: **82401254.6**

(22) Date de dépôt: **05.07.82**

(51) Int. Cl.⁴: **F 16 L 47/02**

(54) **Procédé pour fixer un embout métallique sur un tube en matériau composite et tube ainsi réalisé.**

(30) Priorité: **06.07.81 FR 8113232**

(43) Date de publication de la demande:
**12.01.83 Bulletin 83/2**

(45) Mention de la délivrance du brevet:
**15.10.86 Bulletin 86/42**

(84) Etats contractants désignés:
**DE FR GB NL**

(56) Documents cité:
**EP-A-0 046 869**
**FR-A-1 140 958**
**FR-A-2 242 213**
**FR-A-2 457 999**
**US-A-1 942 829**

(73) Titulaire: **AEROSPATIALE Société Nationale Industrielle, 37 boulevard de Montmorency, F-75781 Paris Cédex 16 (FR)**
Titulaire: **INSTITUT FRANCAIS DU PETROLE, 4, Avenue de Bois- Préau, F-92502 Rueil- Malmaison (FR)**

(72) Inventeur: **Auberon, Marcel, 14 Allée du Pasten, F-33160 Le Haillan Gironde (FR)**
Inventeur: **Cabanel, Daniel, 12 lotissement des Frères Robinson Avenue du Chut, F-33700 Merignac Gironde (FR)**
Inventeur: **Dolbeau, Michel, 7 chemin de la Source, F-33610 Cestas Gironde (FR)**
Inventeur: **Phan, Albert, 38 Villepreux- Village, F-33160 Saint Aubin de Medox Gironde (FR)**
Inventeur: **Pillois, Philippe, 13 avenue de Mazeau, F-33160 Saint Medard en Jalles Gironde (FR)**
Inventeur: **Bournazel, Claude Lucien, Allée des Tilleuls F-78720 Cernay- La- Ville, Dampierre, Yvelines (FR)**
Inventeur: **Huvey, Michel, 2, avenue des Pinsons, F-78380 Bougival, Yvelines (FR)**

(74) Mandataire: **Lepeudry- Gautherat, Thérèse, Armengaud Jeune Cabinet Lepeudry 23 boulevard de Strasbourg, F-75010 Paris (FR)**

LIBER, STOCKHOLM 1986

## Description

La présente invention est relative à un procédé pour fixer un embout métallique sur un tube en un matériau composite et au tube ainsi réalisé. Par matériau composite, il faut entendre des fibres telles que fibres de verre, fibres de carbone, imprégnées d'une résine, par exemple une résine époxy. De tels tubes en matériau composite sont destinés à être notamment utilisés dans la recherche pétrolière en mer.

Dans ce domaine particulier, les tubes et leurs embouts doivent résister à des forces de traction pouvant atteindre, dans les conditions normales d'utilisation, un million de newtons environ; c'est pourquoi on préfère encore actuellement utiliser des tubes métalliques à embouts métalliques dont on connaît parfaitement la résistance à de telles charges. En effet, on a pu calculer que le flux de traction exprimé par la formule

$$\frac{T}{\pi D}$$

dans laquelle T est l'effort de traction et D le diamètre du tube, peut atteindre dans ce domaine, environ 3 500 000 newtons/mètre.

Dans un domaine comme celui de la recherche pétrolière en mer, les tubes en matériau composite munis d'embouts métalliques, dont les performances peuvent être comparables à celles des tubes métalliques actuels, présentent des avantages certains notamment du fait de leur résistance à la fatigue et à la corrosion, et de leur moindre poids.

Malheureusement, on n'a pu jusqu'à maintenant fabriquer de tels tubes que pour des utilisations mettant en oeuvre des flux de traction faibles.

On connaît actuellement des procédés industriels pour réaliser des tubes en matériau composite munis d'embouts métalliques.

Selon un premier procédé, on dispose des brides métalliques tournantes sur collets qui sont collées par emmanchement sur des tubes en matériau composite afin de fixer les embouts. Les tubes sont ensuite raccordés par boulonnage des brides comme il est d'usage en tuyauterie métallique traditionnelle. Mais de tels tubes ne peuvent être utilisés que sous des contraintes faibles, et notamment lorsque le flux de traction ne dépasse guère 500 000 newtons/mètre.

Selon un second procédé, on pratique, sur les parois internes des embouts métalliques, des gorges circulaires de formes déterminées et on les emmanche sur le tube en matériau composite non encore polymérisé. La fixation des embouts sur les tubes est réalisée par la polymérisation du matériau composite et par l'application, au niveau de la liaison entre les embouts et les tubes et avec un moyen quelconque, d'une pression afin que le matériau composite remplisse ces gorges. On obtient ainsi les embouts métalliques intégrés aux tubes et maintenus en place mécaniquement grâce aux gorges remplies de matériau composite. Bien que ce procédé confère à ces tubes des caractéristiques de résistance supérieures au premier procédé, les limites de résistance des matériaux utilisés, en particulier les fibres et résines composant le matériau composite, ne permettent pas, au niveau des embouts métalliques, de supporter des flux de traction dépassant un million de newtons/mètre.

On connaît également par le EP-A-46 869 (en vertu de l'article 54(3) CBE) un mode de liaison entre un arbre destiné à transmettre un couple de rotation et un embout de raccordement, l'arbre étant réalise en matériau composite: la liaison est effectuée au moyen d'une couche d'élastomère. Toutefois, la liaison obtenue ne supporte que des efforts modérés de torsion relatifs à des transmissions de couples. Elle n'est pas prévue pour subir des flux de traction très élevées.

Par ailleurs, des tubes en matériau composite qui seraient munis d'embouts également en matériau composite ne permettraient en aucun cas d'atteindre les performances requises sous les mêmes charges.

Aussi, un but de la présente invention est-il un procédé qui permet de fixer un embout métallique sur un tube en matériau composite, la liaison obtenue présentant des caractéristiques de résistance, particulièrement en traction sensiblement améliorées.

Un objet correspondant de l'invention est un tube en matériau composite qui comporte au moins un embout métallique, et présente lesdites caractéristiques.

Un tel tube permet de remplacer les tubes métalliques actuellement utilisés dans des conditions de contrainte particulièrement élevées, par des tubes en matériau composite munis d'embouts métalliques, selon le mode de fixation de la présente invention.

Un but supplémentaire de la présente invention est de fournir un procédé pour fabriquer de tels tubes en matériau composite munis d'au moins un embout métallique de façon simple et industrielle.

Ces objets et ces buts, ainsi que d'autres qui apparaîtront par la suite, sont atteints, selon la présente invention, par un procédé pour fixer un embout métallique sur un tube en matériau composite qui comprend les étapes suivantes:

a) on enduit d'une colle la surface externe de l'embout métallique destinée à venir en contact avec le tube en matière composite, après l'avoir nettoyée et dégraissée;

b) après séchage de la colle, on dépose une feuille d'élastomère sur cette colle;

c) dans une enceinte, dans laquelle on a placé l'embout métallique issu de l'étape b), on réalise simultanément la vulcanisation de l'élastomère constituant la première feuille et la polymérisation de la colle;

d) après un dégraissage de la face de cette feuille d'élastomère destinée à venir en contact avec le tube en matériau composite, on enduit celle-ci d'une couche de colle;

e) après séchage, on applique sur cette couche le tube en matériau composite non encore polymérisé.

A l'issue de l'étape e), on peut effectuer une étape supplémentaire f) au cours de laquelle le tube subit une pré-polymérisation.

Avantageusement, le séchage de la colle enduite aux étapes a) et d) est réalisé à l'abri de la poussière.

De préférence, le vide est fait et maintenu dans l'enceinte pendant toute la durée de l'étape e).

De préférence, à l'issue de l'étape d) on place l'embout métallique sur un mandrin.

Avantageusement, la colle utilisée au cours des différentes étapes de ce procédé est du type époxy.

Selon un mode de réalisation, on dispose sur la paroi interne d'une coquille une seconde feuille d'un élastomère comme décrit précédemment. Cette coquille peut être métallique et constituée de plusieurs secteurs.

Avantageusement, on solidarise au moyen d'une bague de blocage la coquille sur l'embout.

Après avoir enduit de colle la surface interne de cette seconde feuille, on monte cette coquille autour du tube au niveau de l'embout métallique et on la solidarise notamment par un bobinage circonférentiel d'une frette.

Le tube qui comporte ainsi un embout métallique - dans le cas où il en comporte deux, les opérations décrites précédemment sont menées simultanément à chaque extrémité du tube - est placé dans une étuve afin de polymériser le matériau composite.

L'invention est également relative à un tube en matériau composite qui comprend au moins un embout métallique, une première feuille d'élastomère étant interposée entre eux et adhérant à chacun d'eux, cette feuille d'élastomère adhérant à l'embout sur la surface externe de celui-ci au moyen d'une colle.

En complément, la première feuille d'élastomère adhère à la surface interne du tube en matériau composite également au moyen d'une colle.

Avantageusement, l'adhérence entre la première feuille d'élastomère et l'embout métallique, d'une part, et le tube en matériau composite, d'autre part, est réalisée par une colle du type époxy.

Selon un autre mode de réalisation de l'invention, ce tube comporte une coquille qui l'entoure au niveau de l'embout métallique, une seconde feuille d'un élastomère étant interposée entre celle-ci et le tube lui-même.

De préférence, cette seconde feuille adhère à la paroi interne de cette coquille et à la surface extérieure du tube, notamment par utilisation d'une colle qui peut être du type époxy.

De préférence, une frette, par exemple en fibres de verre, est disposée autour de cette coquille afin de solidariser les secteurs la composant et la maintenir contre le tube.

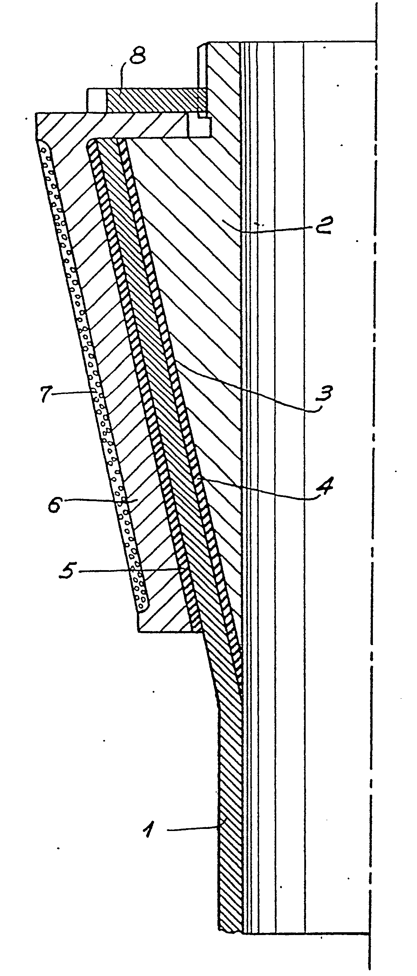

La description qui va suivre et qui ne présente aucun caractère limitatif, permettra à l'homme du métier de mieux comprendre comment la présente invention peut être mise en oeuvre. Elle doit être lue en regard de la figure annexée qui représente une demi-coupe longitudinale d'un tube en matériau composite comprenant un embout métallique.

Ainsi qu'on peut le voir sur cette figure, un tube 1 en matériau composite est muni à une de ses extrémités d'un embout métallique 2, ayant une forme sensiblement tronconique selon cet exemple de réalisation.

Entre la surface externe 3 de cet embout 2 et la paroi interne du tube 1 est disposée une feuille 4 d'un élastomère qui est collée sur cette surface externe 3.

Ainsi la liaison entre l'embout métallique 2 et le matériau composite constituant le tube 1 est réalisée par une feuille 4 d'un élastomère qui se trouve interposée entre eux.

Cette feuille 4 d'un élastomère apporte à la liaison réalisée la souplesse nécessaire pour amortir les flux de traction et transmettre progressivement des efforts entre l'embout métallique 2 et le tube 1 en matériau composite.

Si nécessaire, afin d'améliorer encore les performances, le tube 1 comprend également au niveau de sa liaison avec l'embout métallique 2, une autre feuille 5 d'un élastomère qui adhère à sa paroi externe, l'ensemble ainsi réalisé étant enferné dans deux demi-coquilles 6 solidarisées entre elles et avec cette feuille 5 par tout moyen.

Afin de rendre ces deux demi-coquilles 6 qui peuvent être métalliques, solidaires l'une de l'autre et de les maintenir serrées contre la feuille 5, on réalise un frettage 7 autour d'elles, celui-ci étant constitué par exemple de fibres de verre.

Selon ce mode pour réaliser l'invention, le tube 1 est ainsi pris par collage entre deux feuilles 4 et 5 d'un élastomère qui sont elles-mêmes collées l'une 4 sur l'embout 2, l'autre 5 sur les demi-coquilles 6, le tout étant maintenu solidaire, d'une part, par un frettage 7 et, d'autre part, à l'encontre d'un mouvement axial, par un dispositif approprié tel qu'une bague de blocage 8.

Ainsi qu'il a été dit précédemment, la présente invention concerne également un procédé pour fabriquer un tube en matériau composite qui comporte au moins un embout métallique.

La première étape de ce procédé ou étape a) consiste à enduire la surface externe 3 de l'embout métallique 2 d'une première colle après l'avoir rendue propre et apte à recevoir un encollage, comme ceci est d'usage dans les opérations de collage: selon un mode de réalisation préférée ceci est effectué par un léger sablage puis par un dégraissage à la méthyl-éthyl-cétone.

La colle utilisée est par exemple du type époxy permettant de coller un élastomère sur une surface métallique.

Après séchage de cette première colle à l'abri de la poussière, on dépose au cours de l'étape b) une première feuille 4 d'un élastomère sur cette couche de colle. L'épaisseur de cette feuille varie, en fonction de l'épaisseur du tube et des performances requises, entre 0,5 et 5 millimètres.

A l'étape c) on réalise simultanément dans une étuve portée environ à 160°C, après avoir placé l'embout métallique 2 ainsi revêtu dans un sac étanche dans lequel le vide est réalisé et maintenu pendant toute cette étape, d'une part, la vulcanisation de l'élastomère constituant la feuille 4 et, d'autre part, la polymérisation de la première colle.

A l'issue de cette étape c), on monte de manière fixe l'embout métallique 2 ainsi habillé sur un mandrin (non représenté sur la figure) qui sert au dépôt des couches de matériau composite pour constituer le tube 1. Dans cet exemple de réalisation il s'agit d'un dépôt par bobinage filamentaire. On effectue au cours de cette étape d) un dégraissage par exemple à la méthyl-éthyl-cétone, de la surface extérieure de la première feuille 4 d'élastomère. Puis on encolle cette surface extérieure, et on laisse sécher. L'étape d) consiste ainsi en la préparation de la surface extérieure de la première feuille 4 et en son enduction par un produit d'accrochage tel qu'une colle.

Au cours de l'étape suivante e), on procède au bobinage du tube 1 en recouvrant la surface extérieure de la première feuille 4 d'élastomère au fur et à mesure par des couches filamentaires constituant le tube 1. Lorsque le nombre de couches de matériau composite prévu est déposé, on effectue à l'étape f) une pré-polymérisation de ce matériau dans une étuve classique à environ 120°C. On réalise ainsi le collage du matériau composite sur la surface extérieure de la première feuille 4 d'élastomère.

Parallèlement aux étapes a) à e) décrites ci-dessus, on revêt la paroi interne d'une coquille constituée de deux secteurs ou demi-coquilles 6, d'une seconde feuille 5 d'un élastomère selon le même mode opératoire que celui utilisé pour revêtir l'embout métallique 2.

Lorsque le matériau composite du tube 1 est pré-polymérisé et la liaison avec l'embout métallique réalisée, et que les deux demi-coquilles 6 ont leur paroi interne recouverte par collage de la seconde feuille 5, on procède à un dégraissage de la surface interne de cette feuille par exemple en utilisant de la méthyl-éthyl-cétone, ainsi que de la paroi externe du tube 1. On recouvre ensuite avec de la colle, par exemple celle décrite au cours de l'étape a), les surfaces dégraissées des deux demi-coquilles 6. Après séchage, on monte ces deux demi-coquilles 6 autour du tube 1: celuici est ainsi pris entre elles et l'embout métallique 2. On complète le montage, selon cet exemple de réalisation, par la mise en place d'une bague de blocage 8 destinée à rendre solidaire la coquille 6 de l'embout métallique 2. On parfait la fixation des deux demi-coquilles 6 sur le tube 1 au niveau de l'embout métallique 2 intégré dans le matériau composite, par un bobinage circonférentiel d'une frette 7 constituée par un matériau composite de même nature que celui utilisé pour réaliser le tube 1, selon ce mode de réalisation de l'invention.

Le tube complet, constitué de sa partie courante 1, des embouts métalliques 2, des demi-coquilles 6 et du frettage 7, est à nouveau étuvé à environ 160°C afin de polymériser le matériau composite, le frettage et la colle assurant la liaison entre le matériau composite et ces demi-coquilles 6.

Le dispositif de fixation dont peut être muni l'embout métallique 2, permet d'adopter pour solidariser deux tubes, divers dispositifs tels que ceux de vissage ou d'encliquetage.

L'étape f) de pré-polymérisation du matériau composite peut ne pas exister: le matériau composite est de ce fait polymérisé lorsque le tube complet, constitué de sa partie courante 1, des embouts métalliques 2, des demi-coquilles 6 et du frettage 7, est étuvé à environ 160°C.

Selon un autre mode de réalisation de l'invention, le procédé comprend les étapes a) à e) décrites précédemnent et une étape au cours de laquelle on réalise la polymérisation du matériau composite. Dans ce cas, le tube ne comporte ni coquilles ni frettage.

Le procédé selon la présente invention permet la fabrication de tubes en matériau composite comprenant des embouts métalliques qui sont particulièrement bien adaptés à la recherche pétrolière en mer, du fait des propriétés mêmes du matériau composite: moindre poids, bonne résistance à la fatigue et à la corrosion. C'est pourquoi ces tubes peuvent être utilisés pour des forages en mer où leurs avantages par rapport aux tubes métalliques sont déterminants pour des travaux à grande profondeur. Par ailleurs, leur utilisation industrielle est avantageuse chaque fois que l'utilisateur recherche le meilleur rapport poids-performances.

**Revendications**

1.- Procédé pour fixer au moins un embout métallique (2) sur un tube en matériau composite, caractérisé en ce qu'il comprend les étapes suivantes:

a) on enduit d'une colle la surface externe (3) dudit embout métallique (2) destinée à assurer la fixation dudit embout sur ledit tube, après l'avoir nettoyée et dégraissée;

b) après séchage de ladite colle, on dépose une première feuille (4) d'un élastomère sur ladite colle;

c) dans une enceinte, dans laquelle on a placé ledit embout (2) issu de l'étage b), on réalise simultanément la vulcanisation dudit élsatomère constituant ladite première feuille (4) et la polymérisation de ladite colle;

d) après avoir effectué un dégraissage de la surface extérieure de ladite première feuille (4), on enduit celleci d'une couche de colle;

e) après séchage, on procède au dépôt des différentes couches de matériau composite constituant ledit tube (1) en recouvrant la surface extérieure de ladite première feuille (4) par ledit matériau.

2.- Procédé selon la revendication 1, caractérisé en ce qu'il comprend une étape supplémentaire:

f) on effectue une pré-polymérisation du tube issu de ladite étape e) dans une enceinte.

3.- Procédé selon les revendications 1 ou 2, caractérisé en ce que le séchage de la colle enduite aux étapes a) et d) est réalisé à l'abri de la poussière.

4.- Procédé selon l'une quelconque des revendications 1 à 5, caractérisé en ce que le vide est fsit et maintenu dans ladite enceinte pendant toute la durée de ladite étape c).

5.- Procédé selon l'une quelconque des revendications 1 à 4, caractérisé en ce qu'à l'issue de l'étape d) on place ledit embout métallique (2) sur un mandrin.

6.- Procédé selon l'une quelconque des revendications 1 à 5, caractérisé en ce que ladite colle utilisée au cours des étapes a) et d) est du type époxy.

7.- Procédé selon l'une quelconque des revendications 1 à 6, caractérisé en ce que sur la paroi interne d'une coquille (6) on dépose une seconde feuille (5) d'un élastomère selon les mêmes étapes a), b) et c).

8.- Procédé selon la revendication 7, caractérisé en ce que ladite coquille est constituée de plusieurs secteurs.

9.- Procédé selon les revendications 7 et 8, caractérisé par le fait que l'on dégraisse la surface interne de ladite seconde feuille (5), qu'on l'enduit d'une colle et que l'on laisse sécher.

10.- Procédé selon la revendication 9, caractérisé par le fait que ladite colle est du type époxy.

11.- Procédé selon la revendication 9, caractérisé par le fait qu'après séchage on monte ladite coquille (6) autour du tube (1) au niveau dudit embout métallique (2) et qu'on la solidarise audit embout (2).

12.- Procédé selon la revendication 11, caractérisé par le fait que ladite solidarisation est réalisée au moyen d'une bague de blocage (8).

13.- Procédé selon la revendication 11, caractérisé par le fait que ladite solidarisation est réalisée par un bobinage circonférentiel d'une frette (7).

14.- Procédé selon l'une quelconque des revendications 1 à 13, caractérisé par le fait que ledit tube (1) comportant au moins un embout métallique (2) est placé dans une enceinte pour une polymérisation.

15.- Tube en matériau composite (1) comprenant au moins un embout métallique caractérisé par le fait qu'entre ledit tube (1) et ledit embout métallique (2) est située une première feuille (4) d'un élastomère, qui adhère à chacun d'eux, ladite feuille (4) d'élastomère adhérant audit embout (2) sur la surface externe (3) de celui-ci au moyen d'une colle.

16.- Tube selon la revendication 15, caractérisé par le fait que ladite colle est du type époxy.

17.- Tube selon la revendication 15 ou la revendication 16, caractérisé par le fait que ladite première feuille (4) d'un élastomère adhère à la surface interne dudit tube (1) en matériau composite par une colle.

18.- Tube selon la revendication 17, caractérisé par le fait que ladite colle est du type époxy.

19.- Tube selon l'une quelconque des revendications 15 à 18 caractérisé par le fait qu'il comporte également une seconde feuille (5) d'un élastomère interposée entre ledit tube (1) et une coquille (6) qui l'entoure au niveau dudit embout métallique (2).

20.- Tube selon la revendication 19, caractérisé par le fait que ladite seconde feuille (5) d'un élastomère adhère à la paroi interne de ladite coquille (6) et à la surface extérieure dudit tube (1).

21.- Tube selon la revendication 20, caractérisé par le fait que ladite adhérence est réalisée par une colle.

22.- Tube selon la revendication 21, caractérisé par le fait que ladite colle est du type époxy.

23.- Tube selon la revendication 19, caractérisé en ce que ladite coquille (6) est constituée de plusieurs secteurs.

24.- Tube selon l'une quelconque des revendications 15 à 23, caractérisé par le fait qu'il comporte une frette (7) autour de ladite coquille (6).

25.- Tube selon l'une quelconque des revendications 15 à 24, caractérisé en ce qu'une bague de blocage (8) rend solidaire la coquille (6) de l'embout métallique (2) correspondant.

**Patentansprüche**

1. Verfahren zur Befestigung mindestens eines Metall-Zwischenrings (2) auf einem Rohr (1) aus Verbundmaterial, gekennzeichnet durch die folgenden Stufen:

(a) Auf die Außenfläche (3) des Metall-Zwischenrings (2), die die Befestigung des Zwischenrings auf dem Rohr gewährleistet, wird nach Reinigung und Entfettung ein Klebstoff aufgebracht,

(b) nach dem Trocknen des Klebstoffs wird eine erste Schicht (4) eines Elastomers auf den Klebstoff aufgebracht,

(c) in einem Behälter, in den der Zwischenring (2) aus Stufe (b) eingebracht wird, wird gleichzeitig die Vulkanisierung des die erste Schicht (4) bildenden Elastomers und die Polymerisation des Klebstoffs durchgeführt,

(d) nach Entfettung der Außenfläche der ersten Schicht (4) wird auf diese eine Klebstoffschicht aufgebracht,

(e) nach dem Trocknen werden die verschiedenen Schichten des das Rohr (1) bildenden Verbundmaterials aufgebracht, wobei die Außenfläche der ersten Schicht (4) mit dem Material bedeckt wird.

2. Verfahren nach Anspruch 1, gekennzeichnet durch eine weitere Stufe:

(f) in einem Behälter wird eine Vorpolymerisation des Rohrs aus Stufe (e) durchgeführt.

3. Verfahren nach Anspruch 1 oder 2, dadurch gekennzeichnet, daß das Trocknen des in den Stufen (a) und (d) aufgebrachten Klebstoffs in staubfreier Umgebung durchgeführt wird.

4. Verfahren nach einem der Ansprüche 1 bis 3, dadurch gekennzeicnnet, daß unter Vakuum gearbeitet wird, das in dem Behälter während der Gesamtdauer der Stufe (c) aufrechterhalten wird.

5. Verfahren nach einem der Ansprüche 1 bis 4, dadurch gekennzeichnet, daß der Metall-Zwischenring (2) am Ende der Stufe (d) auf einen Dorn aufgebracht wird.

6. Verfanren nach eine, der Ansprüche 1 bis 5, dadurch gekennzeichnet, daß der in den Stufen (a) und (d) verwendete Klebstoff ein Epoxy-Klebstoff ist.

7. Verfahren nach einem der Ansprüche 1 bis 6, dadurch gezeichnet, daß auf die Innenwand einer Schale (6) eine zweite Schicht (5) eines Elastomers gemäß den Stufen (a), (b) und (c) aufgebracht wird.

8. Verfahren nach Anspruch 7, dadurch gekennzeichnet, daß die Schale aus mehreren Segmenten besteht.

9. Verfahren nach Anspruch 7 und 8, dadurch gekennzeichnet, daß die Innenfläche der zweiten Schicht (5) entfettet und mit einem Klebstoff beschichtet wird, der getrocknet wird.

10. Verfahren nach Anspruch 9, dadurch gekennzeichnet, daß der Klebstoff ein Epoxy-Klebstoff ist.

11. Verfahren nach Anspruch 9, dadurch gekennzeichnet, daß die Schale (6) nach dem Trocknen um das Rohr (1) auf der Höhe des Metall-Zwischenrings (2) angebracht und mit dem Zwischenring (2) verbunden wird.

12. Verfahren nach Anspruch 11, dadurch gekennzeichnet, daß die Verbindung mit einem Verriegelungsring (8) erfolgt:

13. Verfahren nach Anspruch 11, dadurch gekennzeichnet, daß die Verbindung durch Umwickelung einer Hülse (7) erfolgt.

14. Verfahren nach einem der Ansprüche 1 bis 13, dadurch gekennzeichnet, daß das mindestens einen Metall-Zwischenring (2) umfassende Rohr (1) in einem Behälter zur Polymerisation eingebracht wird.

15. Rohr (1) aus Verbundmaterial mit mindestens einem Metall-Zwischenring (2), dadurch gekennzeichnet, daß sich zwischen dem Rohr (1) und dem Metall-Zwischenring (2) eine erste, an beiden haftende Schicht (4) eines Elastomers befindet, die am Zwischenring (2) an seiner Außenflache (3) mittels eines Klebstoffs haftet.

16. Rohr nach Anspruch 15, dadurch gekennzeichnet, daß der Klebstoff ein Epoxy-Klebstoff ist.

17. Rohr nach Anspruch 15 oder 16, dadurch gekennzeichnet, daß die erste Schicht (4) eines Elastomers an der Innenfläche des Rohrs (1) aus Verbundmaterial mittels eines Klebstoffs haftet.

l8. Rohr nach Ansprucn 17, dadurch gekennzeichnet, daß der Klebstoff ein Epoxy-Klebstoff ist.

19. Rohr nach einem der Ansprüche 15 bis 18, dadurch gekennzeichnet, daß es auch eine zweite Schicht (5) eines Elastomers umfaßt, die zwischen dem Rohr (1) und einer das Rohr auf der Höhe des Metall-Zwischenrings (2) umgebenden Schale (6) angeordnet ist.

20. Rohr nach Anspruch 19, dadurch gekennzeichnet, daß die zweite Schicht (5) eines Elastomers an der Innenwand der Schale (6) und der Außenflācne des Rohrs (1) haftet.

21. Rohr nach Anspruch 20, dadurch gekennzeichnet, daß die Haftung mit einem Klebstoff erfolgt.

22. Rohr nach Anspruch 21, dadurch gekennzeichnet, daß der Klebstoff ein Epoxy-Klebstoff ist.

23. Rohr nach Anspruch 19, dadurch gekennzeichnet, daß die Scnale (6) aus mehreren Segmenten bestent.

24. Rohr nach einem der Ansprüche 15 bis 23, dadurch gekennzeichnet, daß es eine Hülse (7) um die Schale (6) umfaßt.

25. Rohr nach einem der Ansprüche 15 bis 24, dadurch gekennzeichnet, daß ein Verriegelungsring (8) die Schale (6) mit dem entsprechenden Metall-Zwiscnenring (2) verbindet.

## Claims

1. Process for fixing at least one metal ferrule (2) on a tube of composite material (1) characterised in that it comprises the following steps:

a) an adhesive is coated on the external surface (3) of the said metallic ferrule (2) designed to ensure the fixing of the said ferrule on the said tube, after having cleaned and degreased it;

b) after drying the said adhesive, a first sheet (4) of an elastomer is applied on the said adhesive;

c) in an enclosure in which the said ferrule (2) has been placed which emerges from stage b), one effects simultaneously the vulcanisation of the said elastomer constituting the said first sheet (4) and the polymerisation of the said adhesive;

d) after having effected degreasing of the external surface of the said first sheet (4), this is coated with a layer of adhesive;

e) after drying the various layers of composite material constituting the said tube (1) are deposited covering the exterior surface of said first sheet (4) by the said material.

2. Process according to claim 1 characterised in that it comprises a supplemental step:

f) a prepolymerisation of the tube which results from the said stage e) is carried out in an enclosure.

3. Process according to claims 1 or 2 characterised in that the drying of the adhesive coated in stages a) and d) is effected under shelter from dust.

4. Process according to any one of claims 1 to 3 characterised in that vacuum is effected and maintained in the said enclosure throughout the whole of the duration of the said stage c).

5. Process according to any one of claims 1 to 4 characterised in that at the end of stage d), the said metallic ferrule (2) is placed on a mandrel.

6. Process according to any one of claims 1 to 5 characterised in that the said adhesive used in the course of stages a) and d) is of the epoxy type.

7. Process according to any one of claims 1 to 6 characterised in that on the internal wall of a shell (6) there is deposited a second sheet (5) of an elastomer according to the same stages a), b) and c).

8. Process according to claim 7 characterised in that the said shell is formed of several sectors.

9. Process according to claims 7 and 8 characterised by the fact that the internal surface of the said second sheet (5) is degreased, coated with an adhesive and allowed to dry.

10. Process according to claim 9 characterised by the fact that the said adhesive is of the epoxy type.

11. Process according to claim 9 characterised by the fact that after drying the said shell (6) is mounted around the tube (1) at the level of the said metallic ferrule (2) and that it is fixed to the said ferrule (2).

12. Process according to claim 11 characterised by the fact that the said fixing is effected by means of a locking ring (8).

13. Process according to claim 11 characterised by the fact that the said fixing is effected by a circumferential winding of a binding (7).

14. Process according to any one of claims 1 to 13 characterised by the fact that the said tube (1) comprising at least one metallic ferrule (2) is placed in an enclosure for a polymerisation.

15. Tube of composite material (1) comprising at least one metallic ferrule (2) characterised by the fact that between the said tube (1) and the said metallic ferrule (2) there is located a first sheet (4) of an elastomer which adheres to each of them, the said sheet (4) of elastomer adhering to the said ferrule (2) on the external surface (3) of this by means of an adhesive.

16. Tube according to claim 15 characterised by the fact that the said adhesive is of the epoxy type.

17. Tube according to claim 15 or claim 16 characterised by the fact that the said first sheet (4) of an elastomer adheres to the internal surface of the said tube (1) of composite material via an adhesive.

18. Tube according to claim 17 characterised by the fact that the said adhesive is of the epoxy type.

19. Tube according to any one of claims 15 to 18 characterised by the fact that it likewise comprises a second sheet (5) of an elastomer interposed between the said tube (1) and a shell (6) which surrounds it at the level of the said metallic ferrule (2).

20. Tube according to claim 19 characterised by the fact that the said second sheet (5) of an elastomer adheres to the internal wall of the said shell (6) and to the external surface of the said tube (1).

21. Tube according to claim 20 characterised by the fact that the said adherence is effected by means of an adhesive.

22. Tube according to claim 21 characterised by the fact that the said adhesive is of the epoxy type.

23. Tube according to claim 19 characterised in that the said shell (6) is constituted by several sectors.

24. Tube according to any one of claims 15 to 23 characterised by the fact that it comprises a binding (7) around the said shell (6).

25. Tube according to any one of claims 15 to 24 characterised in that a locking ring (8) fixes the shell (6) to the corresponding metallic ferrule (2).